(19) Europäisches Patentamt
European Patent Office
Office européen des brevets

(11) **EP 3 460 449 A1**

(12) **EUROPEAN PATENT APPLICATION**

(43) Date of publication:
**27.03.2019 Bulletin 2019/13**

(51) Int Cl.:
***G01N 15/08*** (2006.01)     ***B01D 37/02*** (2006.01)

(21) Application number: **17306275.3**

(22) Date of filing: **26.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Imerys Minerals Limited
Par, Cornwall PL24 2SQ (GB)**

(72) Inventor: **The designation of the inventor has not
yet been filed**

(74) Representative: **Haseltine Lake LLP
Redcliff Quay
120 Redcliff Street
Bristol BS1 6HU (GB)**

(54) **APPARATUS AND METHOD FOR SELECTING FILTER AID**

(57)     Apparatus and methods that enable the selection of an appropriate quantity and/or grade of filter aid to filter various feed materials.

EP 3 460 449 A1

**Description**

## TECHNICAL FIELD

The present invention relates generally to apparatus and methods that enable the selection of an appropriate quantity and/or grade of filter aid to filter various feed materials.

## BACKGROUND

Particulate mineral materials such as diatomaceous earth and perlite can be used to aid filtration of various feed materials, for example feed materials in the food and beverage industry such as precursors to sugar syrups, wine, beer, oils, milk, fruit juices, water and other soft drinks and feed materials in the (non-edible) oil and biodiesel industry. The filtration may, for example, assist in removing contaminants from the feed material and/or increase the clarity of the feed material.

The appropriate type or filter aid and amount of filter aid used may vary depending on the particular process involved, the desired processing parameters and desired end product. A manufacturer may need to test a number of different types of filter aid in a number of different quantities before selecting an appropriate type and amount of filter aid. It is therefore desirable to provide alternative and/or improved methods that enable an appropriate quantity and/or grade of filter aid to be selected.

## SUMMARY

In accordance with a first aspect of the present invention there is provided method for selecting the concentration of filter aid to use for the filtration of a feed material, the method comprising:

a) filtering a first test sample of the feed material with a first concentration of a test filter aid;
b) measuring the volume of filtrate produced in a specified time period or measuring the time taken for a specified amount of filtrate to be produced;
c) using a calibration curve to select the concentration of filter aid to use based on the volume of filtrate produced or time taken measured in step b).

In certain embodiments of the first aspect of the present invention, the method further comprises:

d) filtering a second test sample of the feed material with a second concentration of the test filter aid that is different to the first concentration of the test filter aid;
e) measuring the volume of filtrate produced in the specified time period or measuring the time taken for a specified amount of filtrate to be produced;
f) determining a correction factor, F, by the following equation:

$$F = \frac{\Delta V_C}{\Delta V_T}$$

in which

$\Delta V_c$ is the difference in the volume of filtrate produced in the specified time period or difference in time taken to filter the specified volume, during filtration of a calibration sample of the material used to create the calibration curve with the first concentration and the second concentration of the test filter aid;
$\Delta V_T$ is the difference in the volume of filtrate produced in the specified time period or difference in time taken to filter the specified volume, during filtration of the first test sample of the feed material with the first concentration of filter aid and the second test sample of the feed material with the second concentration of filter aid; and

g) dividing the concentration of filter aid determined by the method of the first aspect of the present invention by the correction factor, F

In certain embodiments of the first aspect of the present invention, step c) includes:

(i) equating the feed material with a certain concentration of a calibration material by selecting the concentration of calibration material that produces the same volume of filtrate when filtered with the first concentration of the test filter aid in the specified time period or by selecting the concentration of calibration material that takes the same amount of time to filter a specified amount of filtrate using the first concentration of the test filter aid; and

(ii) selecting the concentration of filter aid to use by selecting a preferred concentration of filter aid that is associated with the concentration of calibration material that has been equated with the feed material.

In certain embodiments of the first aspect of the present invention, the calibration curve was obtained by the method of the second aspect of the present invention, including any embodiment thereof.

In accordance with a second aspect of the present invention there is provided a method for creating a calibration curve for selecting the concentration of filter aid to use for the filtration of a feed material, the method comprising:

i) filtering a plurality of calibration samples of a calibration material with a first concentration of a test filter aid, wherein the calibration samples each have a different concentration of calibration material;

ii) measuring the volume of filtrate produced in a specified time period or measuring the time taken for a specified amount of filtrate to be produced for each calibration sample;

iii) determining a preferred concentration of filter aid to use for filtration of each of the calibration samples;

iv) defining the relationship between the preferred concentration of filter aid determined in step iii) against the volume of filtrate produced in the specified time period or the time taken to filter the specified volume of filtrate measured in step ii).

In certain embodiments, step iv) comprises creating a calibration curve by plotting the preferred concentration of filter aid determined in step iii) against the volume of filtrate produced in the specified time period or against the time taken to filter the specified volume of filtrate measured in step ii) for each of the calibration samples and determining the equation for the line of best fit.

In certain embodiments of the second aspect of the present invention, the preferred concentration of filter aid to use for filtration of a calibration sample is determined by a method comprising:

A) filtering the calibration sample using a plurality of concentrations of the test filter aid;

B) measuring the rate of pressure rise over a specified time period for each concentration of filter aid used;

C) determining the minimum concentration of the test filter aid that provides a desired rate of pressure rise;

wherein the minimum concentration of the filter aid that provides the desired pressure rate rise is the preferred concentration of filter aid to use for filtration of the calibration sample.

In accordance with a third aspect of the present invention there is provided a method for selecting the permeability of filter aid to use for the filtration of a feed material, the method comprising:

a. filtering a first test sample of the feed material with a first filter aid to produce a first filtrate;

b. measuring the turbidity of the first filtrate;

c. filtering a second test sample of the feed material with a second filter aid having a different permeability to the first filter aid material to produce a second filtrate;

d. measuring the turbidity of the second filtrate;

e. defining the relationship between the permeability of filter aid and turbidity of the filtrate produced;

f. selecting a desired turbidity of the feed material after filtration and using the defined relationship to select the permeability of filter aid to use based on the desired turbidity of the feed material after filtration.

In accordance with a fourth aspect of the present invention there is provided a method for creating a calibration curve for selecting the permeability of filter aid to use for the filtration of a feed material, the method comprising:

a. filtering a first test sample of the feed material with a first filter aid to produce a first filtrate;

b. measuring the turbidity of the first filtrate;

c. filtering a second test sample of the feed material with a second filter aid having a different permeability to the first filter aid material to produce a second filtrate;

d. measuring the turbidity of the second filtrate;

e. defining the relationship between the permeability of filter aid and turbidity of the filtrate produced.

In certain embodiments of the third and fourth aspects of the present invention, one or more further test sample(s) of the feed material are filtered with one or more further filter aid(s) having different permeabilities and the turbidity of the filtrate(s) produced is also used to define the relationship between the permeability of filter aid and turbidity of the filtrate produced.

Certain embodiments of any aspect of the present invention may provide one or more of the following advantages:

- reduce the time taken and amount of materials required to predict the amount and/or grade of filter aid to use for filtration of a particular feed material;
- performed on small scale laboratory equipment;
- accurately predicts quantity of filter aid to use to give desired results;
- accurately predicts the grade of filter aid to use to give desired results.

The details, examples and preferences provided in relation to any particulate one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

## BRIEF DESCRIPTION OF THE FIGURES

Figure 1 shows a calibration curve for use in selecting the amount of filter aid to use for filtering a sample.

Figure 2 shows an exemplary filtration device in which A is a 48 micron steel weave soldered into a retaining ring and B is a dutch weave steel support plate.

## DETAILED DESCRIPTION

### Method for selecting concentration of filter aid

There is provided herein a method for selecting the concentration of filter aid to use for the filtration of a feed material. There is further provided herein a method for creating a calibration curve for selecting the concentration of filter aid to use for the filtration of a feed material. There is also provided herein a use of the calibration curve for selecting the concentration of filter aid to use for the filtration of a feed material.

The method for selecting the concentration of filter aid to use for filtration of a feed material may select a concentration of filter aid for filtration of the feed material that is within an optimum range for concentration of filter aid. The term "optimum" may, for example, refer to the quantity of filter aid that provides an efficient filtration, for example by maintaining a desired pressure for a desired period of time, whilst reducing or minimizing the amount of filter aid that is required. The desired period of time and desired pressure may vary depending on the requirements of the manufacturer and/or the apparatus used for the filtration.

The method for selecting the concentration of filter aid to use for filtration of a feed material can be used as a single method to select the concentration of any (multiple) filter aids for filtration of the feed material. In other words, the result of the method is appropriate for all types of filter aid, even filter aids that were not used as the test filter aids to obtain the result of the method.

The method for selecting the concentration of filter aid may comprise assessing the similarity of the feed material to a calibration material and selecting a suitable concentration of filter aid based on the degree of similarity between the feed material and the calibration material. The similarity of the feed material to calibration material may be determined by measuring a particular behaviour of the test material and comparing to the behaviour of the calibration material.

For example, the feed material may be equated to a certain variant of a characteristic of the calibration material such as concentration of calibration material. There is then a predetermined preferred concentration of filter aid that is associated with that variant of the calibration material (e.g. that concentration of the calibration material) and the predetermined preferred concentration of filter aid is selected as the concentration of filter aid to use for filtration of the feed material.

The feed material may, for example, be equated to a certain variant of a characteristic of a calibration material by comparing the behaviour of the feed material to the behaviour of the calibration material as that characteristic of the calibration material (e.g. concentration) is varied. For example, the volume of filtrate produced in a specified time period by filtering a test sample of the feed material and one or more test sample(s) of the calibration material with a test filter aid may be compared. For example, the time taken to produce a specified volume of filtrate by filtering a test sample of the feed material and one or more test sample(s) of the calibration material with a test filter aid may be compared. The one or more test sample(s) of the calibration material may each be a different variant of the characteristic of calibration material (e.g. may each be a different concentration of the calibration material).

The persons carrying out the method for selecting the concentration of filter aid to use may or may not create the calibration curve themselves. The persons carrying out the method for selecting the concentration of filter aid to use may, for example, be provided with information to enable them to correlate the degree of similarity to the calibration material with the concentration of filter aid, for example from an external source, or may, for example, determine the correlation between the degree of similarity and the concentration of filter aid themselves. For example, the persons carrying out the method for selecting the concentration of filter aid to use maybe provided with the predetermined preferred concentrations of filter aid, for example from an external source, or may, for example, determine the preferred concentrations of filter aid themselves.

The method for selecting the concentration of filter aid to use for the filtration of a feed material may comprise:

a) filtering a first test sample of the feed material with a first concentration of a test filter aid;
b) measuring the volume of filtrate produced in a specified time period or measuring the time taken for a specified amount of filtrate to be produced;
c) using a calibration curve to select the concentration of filter aid to use based on the volume of filtrate produced or time taken measured in step b).

The persons carrying out the method for selecting the concentration of filter aid to use may, for example, be provided with the calibration curve, for example from an external source, or may, for example, create the calibration curve themselves.

The feed material may, for example, be any liquid that needs to be filtered. The feed material may, for example, be an aqueous or non-aqueous liquid.

The feed material may, for example, be any precursor to a non-edible oil or biodiesel. For example, the feed material may be a petroleum-based crude oil or derived from a petroleum-based crude oil. For example, the feed material may be a precursor to diesel.

Biodiesel is a form of purified alkyl esters of fatty acids generally referred to as fatty acid alkyl esters (FAAEs). Production of these FAAEs is achieved by the transesterification of animal and/or vegetable fats and/or oils or by the esterification of fatty acids, including free fatty acids (FFAs) found in degraded fat oil. Biodiesel can also be derived from triacylglycerides (also called triglycerides), which may be obtained from plant sources and/or animal fat sources. However, simply performing the esterification and/or transesterification of fatty acids is not enough to produce a usable biodiesel fuel. FFAEs contain impurities that can crystallize, foul engines, and cause numerous problems for the user. Crude biodiesel therefore may undergo filtration to obtain biodiesel that can be marketed commercially. The feed material may, for example, be crude biodiesel or any biodiesel precursor. The feed material may, for example, comprise, consist essentially of or consist of FFAEs.

The feed material may, for example, be any precursor to a food or beverage product. For example, the feed material may be a precursor of sugar syrups, beer, wine, liquor, milk, fruit juice, water or (edible) oils (e.g. animal oils or vegetable oils such as olive oil). For example, the feed material may be a precursor of beer or wine.

The first concentration of the test filter aid may, for example, range from about 100 g/HL to about 600 g/HL (HL = hectolitre = hl = hL). For example, the first concentration of the test filter aid may be equal to or greater than about 200 g/HL or equal to or greater than about 250 g/HL or equal to or greater than about 300 g/HL or equal to or greater than about 350 g/HL. For example, the first concentration of the test filter aid may be equal to or less than about 500 g/HL or equal to or less than about 450 g/HL.

The first concentration of the test filter aid may, for example, range from about 150 g/HL to about 550 g/HL, for example from about 200 g/HL to about 500 g/HL, for example from about 250 g/HL to about 450 g/HL, for example from about 300 g/HL to about 450 g/HL, for example from about 350 g/HL to about 450 g/HL The first concentration of the test filter aid may, for example, range from about 360 g/HL to about 440 g/HL, for example from about 370 g/HL to about 430 g/HL, for example from about 380 g/HL to about 420 g/HL, for example from about 390 g/HL to about 410 g/HL, for example from about 395 g/HL to about 405 g/HL. For example, the first concentration of the test filter aid may be about 400 g/HL.

The test filter aid may, for example, be a mineral filter aid. The mineral filter aid may, for example, be diatomaceous earth, perlite or a combination thereof.

The test filter aid may, for example, be a low permeability filter aid. For example, the test filter aid may have a permeability ranging from 0 darcy to about 2 darcy. For example, the filter aid may have a permeability ranging from about 0.05 darcy to about 1.9 darcy, for example ranging from about 0.1 darcy to about 1.8 darcy, for example from about 0.15 darcy to about 1.7 darcy, for example from about 0.2 darcy to about 1.6 darcy, for example from about 0.25 darcy to about 1.5 darcy, for example from about 0.3 darcy to about 1.4 darcy, for example from about 0.35 darcy to about 1.3 darcy, for example from about 0.4 darcy to about 1.2 darcy, for example from about 0.45 darcy to about 1.1 darcy, for example from about 0.5 darcy to about 1.0 darcy. For example, the test filter aid may have a permeability ranging from about 0.01 darcy to about 1 darcy, for example from about 0.01 darcy to about 0.8 darcy, for example from about 0.01 darcy to about 0.6 darcy, for example from about 0.01 darcy to about 0.5 darcy, for example from about 0.05 darcy to about 0.4 darcy, for example from about 0.1 darcy to about 0.3 darcy, for example from about 0.1 darcy to about 0.2 darcy.

In certain embodiments, the test filter aid is diatomaceous earth having a permeability ranging from about 0 darcy to about 1 darcy, for example from about 0.01 darcy to about 0.8 darcy, for example from about 0.01 darcy to about 0.6 darcy, for example from about 0.01 darcy to about 0.5 darcy, for example from about 0.05 darcy to about 0.4 darcy, for example from about 0.1 darcy to about 0.3 darcy, for example from about 0.1 darcy to about 0.2 darcy.

In certain embodiments, the test filter aid is perlite having a permeability ranging from about 1 darcy to about 2 darcy, for example from about 1.1 darcy to about 1.95 darcy, for example from about 1.2 darcy to about 1.9 darcy, for example from about 1.3 darcy to about 1.85 darcy, for example from about 1.4 darcy to about 1.8 darcy. In certain embodiments, the test filter aid is perlite having a permeability ranging from about 1.5 darcy to about 2 darcy or from about 1.6 darcy to about 1.9 darcy or from about 1.8 darcy to about 1.9 darcy.

Permeability may, for example, be measured by the water permeability method described by Darcy.

The specified period of time for measuring the volume of filtrate produced may be equal to or less than about 10 minutes. For example, the specified period of time for measuring the volume of filtrate produced may be equal to or less than about 9 minutes or equal to or less than about 8 minutes or equal to or less than about 7 minutes or equal to or less than about 6 minutes or equal to or less than about 5 minutes. The specified time period for measuring the volume of filtrate produced may be equal to or less than about 60 seconds. For example, the specified time period for measuring the volume of filtrate produced may be equal to or less than about 55 seconds or equal to or less than about 50 seconds or equal to or less than about 45 seconds or equal to or less than about 40 seconds or equal to or less than about 35 seconds or equal to or less than about 30 seconds or equal to or less than about 25 seconds or equal to or less than about 20 seconds or equal to or less than about 15 seconds. For example, the specified time period for measuring the volume of filtrate produced may be equal to or greater than about 5 seconds or equal to or greater than about 10 seconds or equal to or greater than about 15 seconds.

The specified volume of filtrate may, for example, be equal to or less than about 1000 mL. For example, the specified volume of filtrate may be equal to or less than about 900 mL or equal to or less than about 800 mL or equal to or less than about 700 mL or equal to or less than about 600 mL or equal to or less than about 500 mL. The specified volume of filtrate may, for example, be equal to or greater than about 50 mL, for example equal to or greater than about 100 mL or equal to or greater than about 150 mL or equal to or greater than about 200 mL or equal to or greater than about 250 mL.

The filtering of the test samples of the feed material with test filter aid may, for example, occur at a pressure equal to or less than about 1 bar. For example, the filtering of the test samples of the feed material with test filter aid may occur at a pressure equal to or less than about 0.9 bar or equal to or less than about 0.8 bar or equal to or less than about 0.7 bar or equal to or less than about 0.6 bar or equal to or less than about 0.5 bar or equal to or less than about 0.4 bar or equal to or less than about 0.3 bar or equal to or less than about 0.2 bar or equal to or less than about 0.1 bar.

There is further provided herein a method for creating a calibration curve for selecting the concentration of filter aid to use for the filtration of a feed material. The term "calibration curve" relates to a mathematical relationship between a particular characteristic of a calibration material and a preferred concentration of filter aid to use for filtration of the calibration material. Creation of the calibration curve may therefore comprise defining the relationship between a particular characteristic of a calibration material and a preferred concentration of filter aid to use for filtration of the calibration material. This may or may not involve plotting a graph. The calibration curve may therefore be expressed as a mathematical formula or may be displayed by plotting on a graph.

A feed material can then be equated to a certain variant of the characteristic of the calibration material and the preferred concentration of filter aid that is associated with that variant is selected as the concentration of filter aid to use for filtration of the feed material. The calibration curve may be created prior to performing the method for selecting the concentration of filter aid to use for the filtration of a feed material. The calibration curve may, for example, be created and then distributed to another party and the other party may perform the method for selecting the concentration of filter aid to use for the filtration of a feed material.

The calibration curve may, for example, be created by assessing how the preferred concentration of filter aid for filtration of a calibration material changes with a particular characteristic of the calibration material. For example, it may be determined how the preferred concentration of filter aid varies with concentration of the calibration material.

The particular characteristic of the calibration material is an indicator of similarity of the feed material to the calibration material. The similarity of the feed material to the calibration material may then be assessed by comparing the feed material to variants of the particular characteristic of the calibration material (e.g. by comparing the feed material to different concentrations of the calibration material). For example, the behaviour of the feed material may be compared to the behaviour of different variants of the particular characteristic of the calibration material. For example, the volume of filtrate produced in a specified time period by filtering a test sample of the feed material and one or more test sample(s) of the calibration material with a test filter aid may be compared. For example, the time taken for a specified volume of filtrate to be produced by filtering a test sample of the feed material and one or more test sample(s) of the calibration material with a test filter aid may be compared. The one or more test sample(s) of the calibration material may each be a different variant of the characteristic of calibration material (e.g. may each be a different concentration of the calibration material).

The calibration curve may define the preferred concentration of filter aid as a function of the particular characteristic of the calibration material specified above such as concentration of the calibration material. Additionally or alternatively the calibration curve may define the preferred concentration of filter aid as a function of a particular behaviour of the calibration material that is proportional to the particular characteristic of the calibration material specified above, for example the calibration curve may define the preferred concentration of filter aid as a function of volume of filtrate produced when filtering with a test filter aid for a specified period of time or as a function of time taken for a specified volume of filtrate to be produced.

The calibration curve may, for example, be made by a method comprising:

i) filtering a plurality of calibration samples of a calibration material with a first concentration of a test filter aid, wherein the calibration samples each have a different concentration of calibration material;
ii) measuring the volume of filtrate produced in a specified time period or measuring the time taken for a specified volume of filtrate to be produced for each calibration sample;
iii) determining a preferred concentration of filter aid to use for filtration of each of the calibration samples;
iv) defining the relationship between the preferred concentration of filter aid determined in step iii) against the volume of filtrate produced in the specified time period or the time taken to filter the specified volume of filtrate measured in step ii).

In certain embodiments, step iv) comprises creating a calibration curve by plotting the preferred concentration of filter aid determined in step iii) against the volume of filtrate produced in the specified time period or the time taken to filter the specified volume of filtrate measured in step ii) for each of the calibration samples and determining the equation for the line of best fit.

The calibration material may, for example, be any material that is similar in nature to the feed material. The calibration material may, for example, be any material that behaves in a similar way to the feed material. The calibration material may, for example, be equally or more difficult to filter than the feed material that is to be filtered.

The calibration material may, for example, comprise organic solids, for example organic solids in suspension. The organic solids may, for example, be compressible. The organic solids may, for example, be small, for example, have an average particle size equal to or less than about 10 $\mu$m or equal to or less than about 8 $\mu$m or equal to or less than about 6 $\mu$m or equal to or less than about 5 $\mu$m or equal to or less than about 4 um or equal to or less than about 2 $\mu$m. The calibration material may, for example, comprise one or more of malt extract (e.g. barley malt extract), milk serum, cocoa powder, sugar, oil (e.g. rapeseed oil) and/or whey. For example, the organic solids may comprise barley malt extract. In certain embodiments, the calibration material is an Ovaltine® product (e.g. original or chocolate Ovaltine®) obtained from any country, for example obtained from the UK.

The plurality of calibration samples that are used to create the calibration curve may each have a different concentration of calibration material. The concentration of calibration material in each calibration sample may, for example, range from about 0.01 g/L to about 10 g/L. For example, the concentration of calibration material in each calibration sample may range from about 0.1 g/L to about 10 g/L or from about 0.5 g/L to about 9 g/L or from about 1 g/L to about 8 g/L or from about 1.5 g/L to about 7 g/L or from about 2 g/L to about 6 g/L or from about 2.5 g/L to about 5 g/L. The concentration of calibration material in each calibration sample may, for example, range from about 0.01 g/L to about 2 g/L or from about 0.1 g/L to about 2 g/L. The difference in concentration between the calibration sample with the highest concentration of calibration material and the calibration sample with the lowest concentration of calibration material may, for example, be at least about 1 g/L. For example, the difference in concentration between the calibration sample with the highest concentration of calibration material and the calibration sample with the lowest concentration of calibration material may be at least about 2 g/L or at least about 3 g/L or at least about 4 g/L or at least about 5 g/L. The difference in concentration between the calibration sample with the highest concentration of calibration material and the calibration sample with the lowest concentration of calibration material may, for example, be up to about 20 g/L, for example up to about 15 g/L, for example up to about 12 g/L, for example up to about 10 g/L.

The test filter aid that is used to filter the plurality of calibration samples is the same test filter aid that is used to filter the first test sample of the feed material during the method for selecting the concentration of filter aid to use for filtration as described above. The concentration of the test filter aid that is used to filter the plurality of calibration samples is also the same as the concentration of test filter aid that is used to filter the first test sample of the feed material during the method for selecting the concentration of filter aid to use for filtration as described above.

The specified time period for measuring volume of filtrate produced using the calibration samples is substantially the same as the specified time period for measuring volume of filtrate produced using the test sample of the feed material during the method for selecting the concentration of filter aid to use for filtration as described above. For example, the specified time period for measuring volume of filtrate produced using the calibration samples may be within about 5 seconds (+ or - 5 seconds) or within about 4 seconds or within about 3 seconds or within about 2 seconds or within about 1 second of the specified time period for measuring volume of filtrate produced using the test sample of the feed material during the method for selecting the concentration of filter aid to use for filtration as described above. For example, the specified time period for measuring volume of filtrate produced using the calibration samples may be the same as the specified time period for measuring volume of filtrate produced using the test sample of the feed material during the method for selecting the concentration of filter aid to use for filtration as described above.

The specified amount of filtrate produced using the calibration samples is substantially the same as the specified amount of filtrate produced using the test sample of the feed material during the method for selecting the concentration of filter aid to use for filtration as described above. For example, the specified amount of filtrate produced may be within about 2 mL (+ or - 2 mL) or within about 1.5 mL or within about 1 mL or within about 0.5 mL of the specified amount of filtrate produced when using the test sample of the feed material during the method for selecting the concentration of filter aid to use for filtration as described above. For example, the specified amount of filtrate produced using the calibration samples may be the same as the specified amount of filtrate produced when using the test sample of the feed material during the method for selecting the concentration of filter aid to use for filtration as described above.

The preferred concentration of filter aid to use for each calibration sample may be determined by filtering each calibration sample with one or more concentrations of filter aid and selecting a concentration of filter aid that gives a desired result. Preferably, the minimum concentration of filter aid that gives a desired result is selected so no excess filter aid is used unnecessarily. The desired result may vary depending on the manufacturer's requirements and the desired product.

In certain embodiments, the desired result is for a certain amount of feed material to be filtered in a certain amount of time. In other words, in certain embodiments, the desired result is to achieve a certain rate of filtration. This may be related to the pressure maintained during filtration.

In certain embodiments, the desired result is for a certain pressure to be maintained. For example, the desired result may be for a certain pressure to be maintained for a certain period of time. This may, for example, be measured by measuring the rate of pressure rise over a specified time period during filtration of each calibration sample for each concentration of filter aid tested.

Therefore, in certain embodiments, the preferred concentration of filter aid to use for filtration of a calibration sample is determined by a method comprising:

A) filtering the calibration sample using a plurality of concentrations of the filter aid;
B) measuring the rate of pressure rise over a specified time period for each concentration of filter aid used;
C) determining the minimum concentration of filter aid that provides a desired rate of pressure rise;

wherein the minimum concentration of filter aid that provides the desired pressure rate rise is the preferred concentration of filter aid to use for filtration of the calibration sample.

In certain embodiments, the desired rate of pressure rise ranges from about 0.3 bar/hour to about 3 bar/hour. For example, the desired rate of pressure rise may range from about 0.3 bar/hour to about 2.5 bar/hour or from about 0.3 bar/hour to about 2 bar/hour or from about 0.3 bar/hour to about 1.5 bar/hour or from about 0.3 bar/hour to about 1 bar/hour or from about 0.3 bar/hour to about 0.6 bar/hour or from about 0.3 bar/hour to about 0.5 bar/hour. For example, the desired rate of pressure rise may range from about 1.5 bar/hour to about 3 bar/hour. For example, the desired rate of pressure rise may range from about 2 bar/hour to about 2.5 bar/hour. The desired rate of pressure rise may vary depending on the type of apparatus used.

In certain embodiments, the specified time period for measuring the pressure rate rise ranges from about 1 minute to about 2 hours. For example, the specified time period for measuring the pressure rate rise may range from about 2 minutes to about 105 minutes or from about 3 minutes to about 75 minutes or from about 4 minutes to about 60 minutes or from about 5 minutes to about 60 minutes or from about 10 minutes to about 60 minutes or from about 15 minutes to about 50 minutes or from about 20 minutes to about 40 minutes or from about 25 minutes to about 30 minutes.

In certain embodiments, a correction factor is applied to the concentration of filter aid that is selected for the filtration of a feed material. This may, for example, account for the differences between the feed material and calibration material.

In certain embodiments, the correction factor is calculated by filtering the feed material and the calibration material with one or more different concentration(s) of the test filter aid and comparing the difference in filtration of the feed material with the two or more different concentrations of test filter aid and the difference in filtration of the calibration material with the two or more different concentrations of test filter aid.

In certain embodiments, the correction factor F is defined by the following equation:

$$F = \frac{\Delta V_C}{\Delta V_T}$$

in which

$\Delta V_c$ is the difference in the volume of filtrate produced in the specified time period or time taken to obtain a specified amount of filtrate during filtration of a calibration sample of the material used to create the calibration curve with the first concentration and the second concentration of the test filter aid; and

$\Delta V_T$ is the difference in the volume of filtrate produced in the specified time period or time taken to obtain a specified amount of filtrate during filtration of the first test sample of feed material with the first concentration of filter aid and the second test sample of feed material with the second concentration of filter aid.

Where the correction factor F is defined by the equation specified above, the concentration of filter aid for filtration of the feed material that was determined by the method described above may be divided by the correction factor F.

In certain embodiments, the method for selecting the concentration of filter aid to use for the filtration of a feed material may therefore further comprise:

d) filtering a second test sample of the feed material with a second concentration of the test filter aid that is different to the first concentration of the test filter aid; and

e) measuring the volume of filtrate produced in the specified time period or measuring the time taken to obtain a specified amount of filtrate.

The difference in volume of filtrate produced in the specified time period or the difference in the time taken to obtain a specified amount of filtrate may then be calculated.

In certain embodiments, the persons performing the method for selecting the concentration of filter aid to use for the filtration of a feed material will be provided with the information relating to the difference in filtration of the calibration material with the two or more different concentrations of test filter aid, for example from an external source. In other embodiments, the persons performing the method for selecting the concentration of filter aid to use for the filtration of a feed material will calculate the information relating to the difference in filtration of the calibration material with the two or more different concentrations of test filter aid themselves.

In certain embodiments, the method for selecting the concentration of filter aid to use for the filtration of a feed material may therefore further comprise:

-    filtering a calibration material with a first concentration of a test filter aid and a second concentration of a test filter aid that is different to the first concentration; and

-    measuring the volume of filtrate produced in the specified time period or measuring the time taken to obtain a specified amount of filtrate.

The difference in volume of filtrate produced in the specified time period or the difference in the time taken to obtain a specified amount of filtrate may then be calculated.

The type of test filter aid used (e.g. the permeability of the filter aid used and type of mineral etc.) for the filtration of the samples of feed material and calibration material is the same for all filtration tests for selecting the concentration of filter aid to use, creating the calibration curve and determining the correction factor.

The first concentration of test filter aid may be as described above. The first concentration of test filter aid is the same for the tests where samples of feed material and tests where samples of calibration material are filtered.

The second concentration of test filter aid is different to the first concentration of test filter aid. In certain embodiments, the second concentration is higher than the first concentration of test filter aid. In certain embodiments, the second concentration is lower than the first concentration of test filter aid. The difference between the first concentration of filter aid and second concentration of filter aid is at least about 50 g/HL. For example, the difference between the first concentration of filter aid and second concentration of filter aid may be at least about 75 g/HL or at least about 100 g/HL or at least about 125 g/HL or at least about 150 g/HL or at least about 175 g/HL or at least about 200 g/HL.

In certain embodiments, the second concentration of test filter aid ranges from about 100 g/HL to about 600 g/HL. For example, the second concentration of the test filter aid may be equal to or greater than about 50 g/HL or equal to or greater than about 100 g/HL or equal to or greater than about 150 g/HL or equal to or greater than about 200 g/HL. For example, the second concentration of the test filter aid may be equal to or less than about 500 g/HL or equal to or less than about 450 g/HL or equal to or less than about 400 g/HL or equal to or less than about 350 g/HL or equal to or less than about 300 g/HL or equal to or less than about 250 g/HL.

The second concentration of the test filter aid may, for example, range from about 50 g/HL to about 400 g/HL, for example from about 100 g/HL to about 350 g/HL, for example from about 150 g/HI to about 300 g/HL, for example from about 150 g/HL to about 250 g/HL.

The concentration of calibration material in the calibration samples is the same for the filtrations with the first and second concentrations of the test filter. In certain embodiments, the concentration of calibration material ranges from about 1 g/L to about 5 g/L. For example, the concentration of calibration material may range from about 1.5 g/L to about 4.5 g/L or from about 2 g/L to about 4 g/L or from about 2.5 g/L to about 3.5 g/L. For example, the concentration of calibration material may be about 3 g/L.

Method for selecting grade of filter aid

There is provided herein a method for selecting the permeability of filter aid to use for the filtration of a feed material. There is further provided herein a method for creating a calibration curve for selecting the permeability of filter aid to use for the filtration of a feed material. There is also provided herein a use of the calibration curve for selecting the permeability of filter aid to use for the filtration of a feed material.

The method for selecting the permeability of filter aid to use for the filtration of a feed material may select a permeability of filter aid for the filtration of the feed material that is within an optimum range for permeability of filter aid. The term "optimum" may, for example, refer to the permeability of filter aid that provides a desired clarity/turbidity of filtrate. The desired clarity may vary depending on the requirements of the manufacturer and the desired product.

The method for selecting the permeability of filter aid may comprise determining the difference in result obtained when filtering a feed material with one or more different filter aids having a different permeability and extrapolating the results to filter aids having other permeabilities. For example, the method for selecting the permeability of filter aid may comprise determining the difference in clarity achieved when filtering a feed material with one or more different filter aids having different permeabilities and extrapolating the results to filter aids having other permeabilities.

The method for selecting the permeability of filter aid comprises creating a calibration curve. The term "calibration curve" relates to a mathematical relationship between a particular characteristic of a calibration material and a preferred concentration of filter aid to use for filtration of the calibration material. Creation of the calibration curve may therefore comprise defining the relationship between the permeability of a filter aid and a particular characteristic of the feed material or filtrate, such as turbidity. This may or may not involve plotting a graph. The calibration curve may therefore be expressed as a mathematical formula or may be displayed by plotting on a graph.

The method for selecting the permeability of filter aid to use for the filtration of a feed material may, for example, comprise:

    a. filtering a first test sample of the feed material with a first filter aid to produce a first filtrate;
    b. measuring the turbidity of the first filtrate;
    c. filtering a second test sample of the feed material with a second filter aid having a different permeability to the first filter aid material to produce a second filtrate;
    d. measuring the turbidity of the second filtrate;
    e. defining the relationship between the permeability of filter aid and turbidity of the filtrate produced;
    f. selecting a desired turbidity of the feed material after filtration and using the relationship defined in step e to select the permeability of filter aid to use based on the desired turbidity of the feed material after filtration.

In certain embodiments, step e comprises creating a calibration curve by plotting the turbidity of each filtrate against the permeability of the filter aid used to produce the filtrate, wherein the permeability of the filter aid is plotted on a logarithmic scale, and determining the equation for the line of best fit. The line of best fit may, for example, be determined by drawing a straight line between each point.

The method for selecting the permeability of filter aid to use for the filtration of a feed material may, for example, comprise filtering one or more further test samples of the feed material with one or more further filter aids having different permeabilities and measuring the turbidity of the filtrate produced. The results obtained can then be used to define the relationship between the permeability of filter aid and turbidity of the filtrate produced. For example, the results obtained can also be plotted and the line of best fit determined in order to create a calibration curve.

The filter aid may, for example, be a mineral filter aid. The mineral filter aid may, for example, be diatomaceous earth, perlite or a combination thereof.

In certain embodiments, the one or more filter aids that are used in the method for selecting the permeability of filter aid to use for filtration of a feed are the same type of filter aid, for example are all the same type of mineral such as all diatomaceous earth filter aids or all perlite filter aids.

In certain embodiments, the first filter aid is a low permeability filter aid. In certain embodiments, the first filter aid has a permeability ranging from about 0 to about 3 darcy. For example, the first filter aid may have a permeability ranging from about 0.01 darcy to about 2.5 darcy or from about 0.1 darcy to about 2 darcy or from about 0.5 darcy to about 1.9 darcy or from about 1 darcy to about 1.8 darcy. For example, the first filter aid may have a permeability ranging from about 0.01 darcy to about 1.5 darcy or from about 0.1 darcy to about 1 darcy or from about 0.1 darcy to about 0.5 darcy.

In certain embodiments, the second filter aid is a high permeability filter aid. In certain embodiments, the second filter aid has a permeability ranging from about 3 darcy to about 20 darcy. For example, the second filter aid may have a permeability ranging from about 3 darcy to about 18 darcy or from about 3 darcy to about 16 darcy or from about 3 darcy to about 15 darcy or from about 3 darcy to about 14 darcy or from about 3 darcy to about 12 darcy or from about 3 darcy to about 10 darcy or from about 3 darcy to about 8 darcy or from about 3 darcy to about 6 darcy or from about 3 darcy to about 5 darcy. For example, the second filter aid may have a permeability ranging from about 3 darcy to about 6 darcy or from about 3.5 darcy to about 5.5 darcy or from about 3.5 darcy to about 5 darcy or from about 3.5 darcy to about 4.5 darcy. For example, the second filter aid may have a permeability of about 4 darcy.

In certain embodiments, the difference in permeability of the filter aid having the lowest permeability (e.g. the first filter aid) and the filter aid having the highest permeability (e.g. the second filter aid) is at least about 2 darcy. For example, the difference in permeability of the filter aid having the lowest permeability and the filter aid having the highest permeability may be at least about 2.5 darcy or at least about 3 darcy or at least about 3.5 darcy or at least about 4 darcy. For example, the difference in permeability of the filter aid having the lowest permeability and the filter aid having the highest permeability may be equal to or less than about 15 darcy, for example equal to or less than about 12 darcy, for example equal to or less than about 10 darcy, for example equal to or less than about 8 darcy, for example equal to or less than about 6 darcy.

The concentration of the various filter aids tested in the method for selecting the permeability of filter aid to use for the filtration of a feed material is the same.

The concentration of the filter aids tested may, for example, range from about 100 g/HL to about 600 g/HL. For example, the first concentration of the test filter aid may be equal to or greater than about 100 g/HL or equal to or greater than about 150 g/HL or equal to or greater than about 200 g/HL or equal to or greater than about 250 g/HL or equal to or greater than about 300 g/HL or equal to or greater than about 350 g/HL. For example, the first concentration of the test filter aid may be equal to or less than about 500 g/HL or equal to or less than about 450 g/HL.

The turbidity of the filtrate may, for example, be measured after a certain volume has been collected or after a certain period of time has passed. For example, the turbidity of the filtrate may be measured after a certain volume has been collected or after a certain period of time has passed, whichever occurs first.

The certain volume collected may, for example, range from about 200 ml to about 600 ml. For example, the certain volume collected may range from about 250 ml to about 550 ml or from about 300 ml to about 500 ml or from about 450 ml to about 450 ml.

The certain period of time may, for example, range from about 60 seconds to about 180 seconds. For example, the certain period of time may range from about 75 seconds to about 165 seconds or from about 90 seconds to about 150 seconds or from about 105 seconds to about 135 seconds.

The filtering of the test samples of the feed material with a filter aid may, for example, occur at a pressure equal to or less than about 1 bar. For example, the filtering of the test samples of the feed material with a filter aid may be equal to or less than about 0.9 bar or equal to or less than about 0.8 bar or equal to or less than about 0.7 bar or equal to or less than about 0.6 bar or equal to or less than about 0.5 bar or equal to or less than about 0.4 bar or equal to or less than about 0.3 bar or equal to or less than about 0.2 bar or equal to or less than about 0.1 bar.

Turbidity is a measure of the clarity (cloudiness or haziness) of the filtrate. Turbidity may, for example, be measured by the propensity of particles to scatter a light beam. This may use an instrument called a nephelometer with a detector set up to the side of the light beam. More light reaches the detector if there are lots of particles scattering the source beam compared to fewer particles. The units of turbidity from a nephelometer are Nephelometric Turbidity Units (NTU).

The feed material and/or calibration material may, for example, be as described herein.

Apparatus used for filtration tests

There is further provided herein a filtration device suitable for any one or more of the methods described herein and the use of said filtration device for said methods.

The filtration device comprises a container that is separated into at least two sections by a semi-permeable barrier.

The semi-permeable barrier may, for example, have openings having a diameter ranging from about 20 $\mu$m to about 80 $\mu$m, for example from about 25 $\mu$m to about 75 $\mu$m, for example from about 30 $\mu$m to about 70 $\mu$m, for example from about 35 $\mu$m to about 65 $\mu$m, for example from about 40 $\mu$m to about 60 $\mu$m. The size of the openings may be chosen depending on the particle size of the filter aid to be used with the apparatus.

The semi-permeable barrier may, for example, be paper. The semi-permeable barrier may, for example, be a woven screen, for example a metal woven screen, for example a stainless steel woven screen.

The container of the filtration device may be or may be capable of being pressurized. For example, the container of the filtration device may be or may be capable of being pressurized to a pressure equal to or less than about 1 bar, for example equal to or less than about 0.9 bar, for example equal to or less than about 0.8 bar, for example equal to or less than about 0.7 bar, for example equal to or less than about 0.6 bar, for example equal to or less than about 0.5 bar, for example equal to or less than about 0.4 bar, for example equal to or less than about 0.3 bar, for example equal to or less than about 0.2 bar, for example equal to or less than about 0.1 bar. The container may be pressurized using a gas cartridge, for example a nitrogen or carbon dioxide gas cartridge.

During use of the filtration device, the feed material may be introduced into one section of the container and the filtrate recovered from the other section of the container.

## EXAMPLES

The following illustrates examples of the methods and other aspects described herein. Thus, these Examples should not be considered as limitations of the present disclosure, but are merely in place to teach how to make examples of the present disclosure.

### Example 1 - calibration curve creation

Ovaltine® obtained in the UK (the calibration material) was mixed with water to produce a variety of calibration samples having different concentrations (between 1 g/L and 12 g/L at 1 g/L increments).

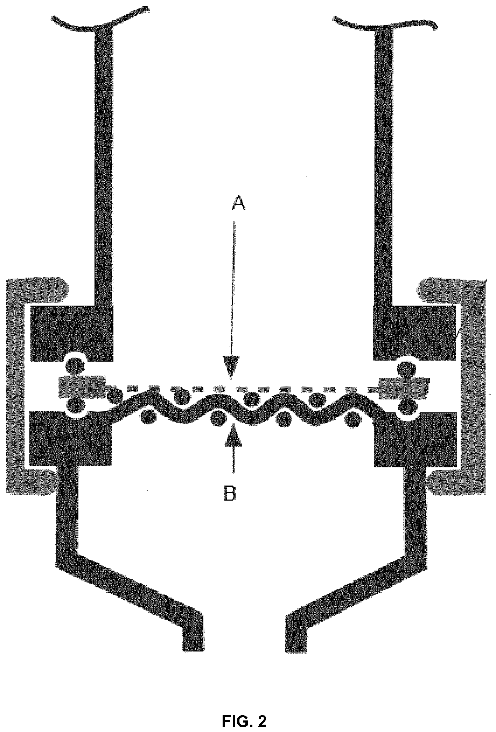

The calibration samples (500 mL) were filtered in a filtration device using 2 g (400 g/HL) of a diatomaceous earth filter aid having a permeability of 0.18 darcy. The filtration device was in accordance with the filtration device shown in Figure 2 and comprised a vertical cylindrical pressure vessel fitted with a screw-release screen (Whatman 541, 47 mm diameter) in the base, into which a filter paper was inserted before each calibration sample was filtered. The filter paper acts similarly to a first precoat layer in an industrial filter device. The apparatus was pressurised from a nitrogen cylinder (0.6 bar) to provide the driving force across the filter septum.

The volume of filtrate produced in the first 30 seconds was measured for each calibration sample. A linear relationship between the volume of filtrate produced in the first 30 seconds and the concentration of the calibration sample was observed.

The preferred concentration of the filter aid to use for filtration of three different calibration samples of different concentrations (5 g/L, 6g/L and 9.5 g/L) was determined by filtering samples with different concentrations of the filter aid (100 g/HL, 130 g/HL, 200 g/HL, 250 g/HL and 300 g/HL) using a Walton Filter at a flow rate of 9 HL/m$^2$/h (30 mL/min in the Walton Filter). The preferred concentration of filter aid under these conditions is the minimum concentration of filter aid that results in a rate of pressure rise in the order of 2.0 to 2.5 bar/h. The rate of pressure rise [bar/h] was measured for each sample over a time period of 10-40 min and the results are shown in the following table:

| Concentration of filter aid (SSC) [g/HL] | 5 g/L sample of Ovaltine | 6 g/L sample of Ovaltine | 9.5 g/L sample of Ovaltine |
|---|---|---|---|
| | 3.69 | | |
| 100 | 2.5/2.06 | 3.36/3.75 | |
| 130 | | 2.20 | |
| 200 | 0.60 | 0.93 | 3.90 |
| 250 | | | 2.38 |
| 400 | 0.36 | | 1.3 |

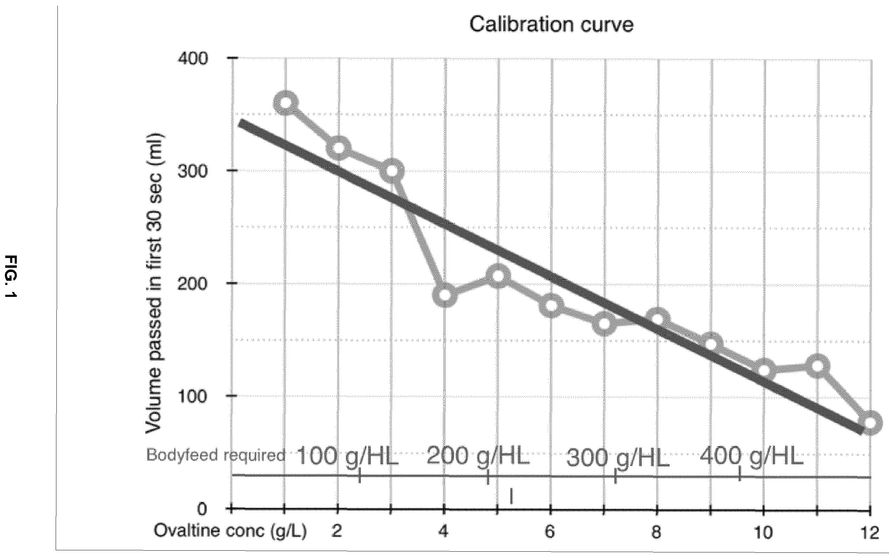

A calibration curve was created by plotting the preferred concentration of the filter aid determined from the pressure rise against the volume of filtrate produced in the first 30 seconds of filtration for each of the samples (see Figure 1). The equation for the line of best fit was then determined.

**Example 2 - selection of concentration of filter aid**

*Red wine 1 (turbidity of 19 ntu)*

A 500 mL test sample of red wine 1 was filtered in the filtration device using 2 g (400 g/HL) of the diatomaceous earth and filtration device used in Example 1 at an operating pressure of 0.6 bar. The volume of filtrate produced in the first 30 seconds was 212 mL. The concentration of Ovaltine that produced 212 mL of filtrate in 30 seconds (the Ovaltine equivalent value) was 6.0 g/L. From this, and the calibration curve determined in Example 1, the amount of filter aid to be used in filtering red wine 1 is selected as 250 g/HL.

To check that this assessment is correct, red wine 1 was also filtered on a Walton Filter at three different concentrations of SSC filter aid with the rate of pressure rise indicating the preferred amount of filter aid, the preferred rate of pressure rise being between 2 and 2.5 bar/h.

| Concentration of filter aid (SSC) [g/HL] | Rate of pressure rise of red wine 1 (19 ntu) (bar/h) |
|---|---|
| 100 | 4.56 |
| 200 | 2.20 |
| 400 | 1.10 |

From these results, it is clear that the preferred amount of filter aid is in the region of 250 g/HL, which is in agreement with the amount determined by using the calibration curve.

*Red wine 2 (turbidity of 370 ntu)*

A 500 mL test sample of red wine 2 was filtered using 2g (400 g/HL) of the diatomaceous earth and filtration device used in Example 1 at an operating pressure of 0.6 bar. The volume of filtrate produced in the first 30 seconds was 133 mL. The concentration of Ovaltine that produced 133 mL of filtrate in 30 seconds (the Ovaltine equivalent value) was 9.5 g/L. From this, and the calibration curve determined in Example 1, it can be determined that the preferred amount of filter aid to be used in filtering red wine 1 is 400 g/HL.

To check that this assessment is correct, red wine 2 was also filtered on a Walton Filter at three different concentrations of SSC filter aid with the rate of pressure rise indicating the preferred amount of filter aid, the preferred rate of pressure rise being between 2 and 2.5 bar/h.

| Concentration of filter aid (SSC) [g/HL] | Rate of pressure rise of red wine 2 (370 ntu) (bar/h) |
|---|---|
| 100 | |
| 200 | 6.60 |
| 400 | 1.80 |

From these results, it is clear that the preferred amount of filter aid is in the region of 400 g/HL or a little less, which is reasonably in agreement with the amount determined by using the calibration curve.

**Example 3 - selection of concentration of filter aid including use of a correction factor**

A 500 mL first test sample of local unfiltered beer from St Austell Brewery (82.7 ntu), characterised by a relatively high yeast content but generally lacking in any finer solids was filtered in the filtration device used in Example 1 using 2 g of the diatomaceous earth used in example 1 (400 g/HL) at an operating pressure of 0.1 bar. The volume of filtrate produced in the first 15 seconds was 112 mL. Using a calibration curve created in accordance with the methods described herein, the preferred amount of filter aid to use for this beer is 148 g/HL.

To determine the correction factor, a second test sample of the beer was filtered in the filtration device used in Example 1 using 1 g of the diatomaceous earth used in example 1 (200 g/HL) at an operating pressure of 0.1 bar. The volume of filtrate produced in the first 15 seconds was 127 mL.

The calibration material Ovaltine® obtained from the UK (3 g/L) was also filtered at concentrations of 200 g/HL and 400 g/HL of the diatomaceous earth used in example 1 in order to determine the correction factor.

|  | First test sample (400 g/HL of SSC) [mL] | Second test sample (200 g/HL of SSC) [mL] | $\Delta V$ [mL] |
|---|---|---|---|
| Ovaltine at 3 g/L | 109 | 135 | -26 |
| Beer | 112 | 127 | -15 |

The correction factor, F, was calculated using the following equation:

$$F = \frac{\Delta V_C}{\Delta V_T}$$

in which

$\Delta V_c$ is the difference in the volume of filtrate formed in 15 seconds from the filtration of Ovaltine (3 g/L) with 400 g/HL and 200 g/HL of diatomaceous earth; and
$\Delta V_T$ is the difference in the volume of filtrate formed in 15 seconds from the filtration of the beer with 400 g/HL and 200 g/HL of diatomaceous earth.

$$F = \frac{\Delta V_C}{\Delta V_T} = \frac{-26}{-15} = 1.73$$

The preferred concentration of filter aid is then corrected by applying the correction factor to the predicted concentration of filter aid resulting from the filtration of the first test sample by dividing the initially predicted concentration of the filter aid by the correction factor.

$$\frac{148\,\mathrm{g/HL}}{1.73} = 85\,\mathrm{g/HL}$$

The selected concentration of filter aid to use for filtration of the beer is therefore 85 g/HL.

**Example 4 - selection of permeability of filter aid**

A 500 mL first test sample was filtered using 2 g of the diatomaceous earth used in example 1 in the filtration device used in Example 1 at an operating pressure of 0.1 bar and a 48 $\mu$m stainless steel weave screen. After either 2 minutes of filtering or after 400 mL of filtrate collected, a sample of filtrate was taken and placed in a cuvette. The turbidity of the filtrate was measured as 0.32 ntu.
A second 500 mL test sample was filtered using a diatomaceous earth having a permeability of 4.2 darcy in the filtration device used in Example 1 at an operating pressure of 0.1 bar and a 48 $\mu$m stainless steel weave screen. After either 2 minutes of filtering or after 400 mL of filtrate collected, a sample of filtrate was taken and placed in a cuvette. The turbidity of the filtrate was measured as 0.75 ntu.
These two turbidities (in ntu) were plotted against the permeabilities of the respective filter aids, wherein permeability was plotted on a logarithmic scale. The two points were connected with a straight line.
The appropriate permeability of filter aid can then be selected by selecting a particular desired turbidity.
The foregoing broadly describes certain embodiments of the present invention without limitation. Variations and modifications as will be readily apparent to those skilled in the art are intended to be within the scope of the present invention as defined in and by the appended claims.
The following numbered paragraphs define particular embodiments of the present invention.

1. A method for selecting the concentration of filter aid to use for the filtration of a feed material, the method comprising:

a) filtering a first test sample of the feed material with a first concentration of a test filter aid;
b) measuring the volume of filtrate produced in a specified time period or measuring the time taken for a specified amount of filtrate to be produced;
c) using a calibration curve to select the concentration of filter aid to use based on the volume of filtrate produced or time taken measured in step b).

2. The method of paragraph 1, wherein the method further comprises:

d) filtering a second test sample of the feed material with a second concentration of the test filter aid that is different to the first concentration of the test filter aid;

e) measuring the volume of filtrate produced in the specified time period or measuring the time taken for a specified amount of filtrate to be produced;

f) determining a correction factor, F, by the following equation:

$$F = \frac{\Delta V_C}{\Delta V_T}$$

in which

$\Delta V_C$ is the difference in the volume of filtrate produced in the specified time period or time taken to obtain a specified amount of filtrate, during filtration of a calibration sample of the material used to create the calibration curve with the first concentration and the second concentration of the test filter aid; and

$\Delta V_T$ is the difference in the volume of filtrate produced in the specified time period or time taken to obtain a specified amount of filtrate, during filtration of the first test sample of the feed material with the first concentration of filter aid and the second test sample of the feed material with the second concentration of filter aid;

g) dividing the concentration of filter aid determined by the method of paragraph 1 by the correction factor, F.

3. The method of paragraph 1 or 2, wherein step c) includes:

(i) equating the feed material with a certain concentration of a calibration material by selecting the concentration of calibration material that produces the same volume of filtrate when filtered with the first concentration of the test filter aid in the specified time period or by selecting the concentration of calibration material takes the same amount of time to filter a specified amount of filtrate using the first concentration of the test filter aid; and

(ii) selecting the concentration of filter aid to use by selecting a preferred concentration of filter aid that is associated with the concentration of calibration material that has been equated with the feed material.

4. The method of any one of paragraphs 1 to 3, wherein the calibration curve was obtained by a method comprising:

i) filtering a plurality of calibration samples of a calibration material with the first concentration of the test filter aid, wherein the calibration samples each have a different concentration of calibration material;

ii) measuring the volume of filtrate produced in the specified time period or measuring the time taken for a specified amount of filtrate to be produced for each calibration sample;

iii) determining a preferred concentration of filter aid to use for filtration of each of the calibration samples;

iv) defining the relationship between the preferred concentration of filter aid determined in step iii) against the volume of filtrate produced in the specified time period or the time taken to filter the specified volume of filtrate measured in step ii).

5. The method of paragraph 4, wherein the preferred concentration of filter aid to use for filtration of a calibration sample is determined by a method comprising:

A) filtering the calibration sample using a plurality of concentrations of the test filter aid;

B) measuring the rate of pressure rise over a specified time period for each concentration of test filter aid used;

C) determining the minimum concentration of the test filter aid that provides a desired rate of pressure rise;

wherein the minimum concentration of the test filter aid that provides the desired pressure rate rise is the preferred concentration of filter aid to use for filtration of the calibration sample.

6. The method of any one of paragraphs 1 to 5, wherein the filter aid is a mineral filter aid.

7. The method of paragraph 6, wherein the mineral filter aid is diatomaceous earth and/or perlite.

8. The method of any one of paragraphs 1 to 7, wherein the filter aid is a low permeability filter aid, for example having a permeability between 0 and about 2 Darcy.

9. The method of any one of paragraphs 1 to 8, wherein the first concentration of the test filter aid and/or the second concentration of the test filter aid ranges from about 100 g/HL to about 600 g/HL.

10. The method of any one of paragraphs 1 to 9, wherein the first concentration of the filter aid is equal to or greater than about 300 g/HL, for example equal to or greater than about 350 g/HL.

11. The method of any one of paragraphs 1 to 10, wherein the first concentration of the filter aid is equal to or less than about 500 g/HL, for example equal to or less than about 450 g/HL.

12. The method of any one of paragraphs 1 to 11, wherein the feed material is a precursor in wine or beer production.

13. The method of any one of paragraphs 1 to 12, wherein the specified time period for measuring the volume of filtrate produced is equal to or less than about 60 seconds, for example equal to or less than about 30 seconds, for example equal to or less than about 15 seconds.

14. The method of any one of paragraphs 1 to 13, wherein the filtering of the test samples of the feed material and/or plurality of calibration samples of a calibration material with a first concentration of a test filter aid occurs at a pressure equal to or less than about 1 bar, for example equal to or less than about 0.6 bar, for example equal to or less than about 0.2 bar.

15. The method of any one of paragraphs 2 to 15, wherein the difference between the first concentration and the second concentration of the filter aid is at least about 50 g/HL, for example at least about 100 g/HL.

16. The method of any one of paragraphs 2 to 16, wherein the second concentration of the filter aid is less than about 300 g/HL, for example equal to or less than about 250 g/HL.

17. The method of any one of paragraphs 2 to 17, wherein the second concentration of the filter aid is equal to or greater than about 100 g/HL, for example equal to or greater than about 150 g/HL.

18. The method of any one of paragraphs 1 to 17, wherein the calibration material comprises organic solids, for example compressible organic solids.

19. The method of any one of paragraphs 1 to 18, wherein the calibration material comprises barley malt extract.

20. The method of any one of paragraphs 5 to 19, wherein the desired pressure rate rise ranges from about 2 bar/hour to about 2.5 bar/hour.

21. The method of any one of paragraphs 5 to 20, wherein the specified time period for measuring the pressure rate rise ranges from about 1 minute to about 2 hours, for example from about 5 minutes to about 1 hour.

22. A method for creating a calibration curve for selecting the concentration of filter aid to use for the filtration of a feed material, the method comprising:

   i) filtering a plurality of calibration samples of a calibration material with a first concentration of a test filter aid, wherein the calibration samples each have a different concentration of calibration material;
   ii) measuring the volume of filtrate produced in a specified time period or measuring the time taken for a specified amount of filtrate to be produced for each calibration sample;
   iii) determining a preferred concentration of filter aid to use for filtration of each of the calibration samples;
   iv) defining the relationship between the preferred concentration of filter aid determined in step iii) against the volume of filtrate produced in the specified time period or the time taken to filter the specified volume of filtrate measured in step ii).

23. The method of paragraph 22, wherein the preferred concentration of filter aid to use for filtration of a calibration sample is determined by a method comprising:

> A) filtering the calibration sample using a plurality of concentrations of the test filter aid;
> B) measuring the rate of pressure rise over a specified time period for each concentration of filter aid used;
> C) determining the minimum concentration of the test filter aid that provides a desired rate of pressure rise;

wherein the minimum concentration of the filter aid that provides the desired pressure rate rise is the preferred concentration of filter aid to use for filtration of the calibration sample.

24. The method of paragraph 22 or 23, wherein the filter aid is a mineral filter aid.

25. The method of paragraph 24, wherein the mineral filter aid is diatomaceous earth and/or perlite.

26. The method of any one of paragraphs 22 to 25, wherein the filter aid is a low permeability filter aid, for example having a permeability between 0 and about 2 Darcy.

27. The method of any one of paragraphs 22 to 26, wherein the first concentration of the test filter aid ranges from about 100 g/HL to about 600 g/HL.

28. The method of any one of paragraphs 22 to 27, wherein the first concentration of the test filter aid is equal to or greater than about 300 g/HL, for example equal to or greater than about 350 g/HL.

29. The method of any one of paragraphs 22 to 28, wherein the first concentration of the test filter aid is equal to or less than about 500 g/HL, for example equal to or less than about 450 g/HL.

30. The method of any one of paragraphs 22 to 29, wherein the feed material is a precursor in wine or beer production.

31. The method of any one of paragraphs 22 to 30, wherein the specified time period for measuring the volume of filtrate produced is equal to or less than about 60 seconds, for example equal to or less than about 30 seconds, for example equal to or less than about 15 seconds.

32. The method of any one of paragraphs 22 to 31, wherein the filtering of the plurality of calibration samples of a calibration material with a first concentration of a test filter aid occurs at a pressure equal to or less than about 1 bar, for example equal to or less than about 0.6 bar, for example equal to or less than about 0.2 bar.

33. The method of any one of paragraphs 22 to 32, wherein the calibration material comprises organic solids, for example compressible organic solids.

34. The method of any one of paragraphs 22 to 33, wherein the calibration material comprises barley malt extract.

35. The method of any one of paragraphs 22 to 34, wherein the desired rate of pressure rise ranges from about 2 bar/hour to about 2.5 bar/hour.

36. The method of any one of paragraphs 22 to 35, wherein the specified time period for measuring the pressure rate rise ranges from about 1 minute to about 2 hours, for example from about 5 minutes to about 1 hour.

37. A method for selecting the permeability of filter aid to use for the filtration of a feed material, the method comprising:

> a. filtering a first test sample of the feed material with a first filter aid to produce a first filtrate;
> b. measuring the turbidity of the first filtrate;
> c. filtering a second test sample of the feed material with a second filter aid having a different permeability to the first filter aid material to produce a second filtrate;
> d. measuring the turbidity of the second filtrate;
> e. defining the relationship between the permeability of filter aid and turbidity of the filtrate produced;
> f. selecting a desired turbidity of the feed material after filtration and using the calibration curve to select the permeability of filter aid to use based on the desired turbidity of the feed material after filtration.

38. The method of paragraph 37, wherein the method further comprises:

filtering one or more further test samples of the feed material with one or more further filter aids having different permeabilities to the first and second filter aids to produce one or more further filtrates;
measuring the turbidity of the one or more further filtrates;
using the turbidity of the one or more further filtrate(s) to define the relationship between the permeability of filter aid and turbidity of the filtrate produced.

39. The method of paragraph 37 or 38, wherein one or more of the filter aid(s) is a mineral filter aid.

40. The method of paragraph 39, wherein the mineral filter aid is diatomaceous earth and/or perlite.

41. The method of any one of paragraphs 37 to 40, wherein all of the filter aids used in the method are the same type of mineral, for example wherein all of the filter aids are diatomaceous earth or wherein all of the filter aids are perlite.

42. The method of any one of paragraphs 37 to 41, wherein the first filter aid has a permeability ranging from about 0.01 to about 2 darcy, for example from about 0.1 to about 0.5 darcy.

43. The method of any one of paragraphs 37 to 42, wherein the second filter aid has a permeability ranging from about 3 to about 6 darcy, for example from about 3.5 to about 4.5 darcy.

44. The method of any one of paragraphs 37 to 43, wherein the permeability of the filter aid having the highest permeability differs from the permeability of the filter aid having the lowest permeability by at least about 2 darcy, for example at least about 3 darcy.

45. The method of any one of paragraphs 37 to 44, wherein the first filter aid is a low permeability filter aid, for example having a permeability ranging from 0 to about 2 Darcy.

46. The method of any one of paragraphs 37 to 45, wherein the second filter aid is a high permeability filter aid, for example having a permeability greater than about 2 Darcy and equal to or less than about 20 Darcy.

47. The method any one of paragraphs 37 to 46, wherein the concentration of the first filter aid and the second filter aid is the same.

48. The method of any one of paragraphs 37 to 47, wherein the concentration of the first filter aid and the second filter aid ranges from about 100 g/HL to about 600 g/HL.

49. The method of any one of paragraphs 37 to 48, wherein the feed material is a precursor in wine or beer production.

50. The method of any one of paragraphs 37 to 49, wherein the turbidity of the filtrate is measured after a certain volume has been collected or after a certain period of time has passed.

51. The method of paragraph 50, wherein the certain volume ranges from about 200 ml to about 600 ml, for example from about 300 ml to about 500 ml.

52. The method of paragraph 50 or 51, wherein the certain period of time ranges from about 60 seconds to about 180 seconds, for example from about 90 seconds to about 150 seconds.

53. The method of any one of paragraphs 50 to 52, wherein the turbidity of the filtrate is measured after a certain volume has been collected or after a certain period of time has passed, whichever occurs first.

54. The method of any one of paragraphs 37 to 53, wherein the filtering of the test samples of the feed material occurs at a pressure equal to or less than about 1 bar, for example equal to or less than about 0.6 bar, for example equal to or less than about 0.2 bar.

55. A method for creating a calibration curve for selecting the permeability of filter aid to use for the filtration of a feed material, the method comprising:

a. filtering a first test sample of the feed material with a first filter aid to produce a first filtrate;

b. measuring the turbidity of the first filtrate;
c. filtering a second test sample of the feed material with a second filter aid having a different permeability to the first filter aid material to produce a second filtrate;
d. measuring the turbidity of the second filtrate;
e. defining the relationship between the permeability of filter aid and turbidity of the filtrate produced;

56. The method of paragraph 55, wherein the method further comprises:

filtering one or more further test samples of the feed material with one or more further filter aids having different permeabilities to the first and second filter aids to produce one or more further filtrates;
measuring the turbidity of the one or more further filtrates;
using the turbidity of the one or more further filtrate(s to define the relationship between the permeability of filter aid and turbidity of the filtrate produced.

57. The method of paragraph 55 or 56, wherein one or more of the filter aid(s) is a mineral filter aid.

58. The method of paragraph 57, wherein the mineral filter aid is diatomaceous earth and/or perlite.

59. The method of any one of paragraphs 55 to 58, wherein all of the filter aids used in the method are the same type of mineral, for example wherein all of the filter aids are diatomaceous earth or wherein all of the filter aids are perlite.

60. The method of any one of paragraphs 55 to 59, wherein the first filter aid has a permeability ranging from about 0.01 to about 1 darcy, for example from about 0.1 to about 0.5 darcy.

61. The method of any one of paragraphs 55 to 60, wherein the second filter aid has a permeability ranging from about 3 to about 5 darcy, for example from about 3.5 to about 4.5 darcy.

62. The method of any one of paragraphs 55 to 61, wherein the permeability of the filter aid having the highest permeability differs from the permeability of the filter aid having the lowest permeability by at least about 2 darcy, for example at least about 3 darcy.

63. The method of any one of paragraphs 55 to 62, wherein the first filter aid is a low permeability filter aid, for example having a permeability ranging from 0 to about 2 darcy.

64. The method of any one of paragraphs 55 to 63, wherein the second filter aid is a high permeability filter aid, for example having a permeability greater than about 2 Darcy and equal to or less than about 20 Darcy.

65. The method any one of paragraphs 55 to 64, wherein the concentration of the first filter aid and the second filter aid is the same.

66. The method of any one of paragraphs 55 to 65, wherein the concentration of the first filter aid and the second filter aid ranges from about 100 g/HL to about 600 g/HL.

67. The method of any one of paragraphs 55 to 66, wherein the feed material is a precursor in wine or beer production.

68. The method of any one of paragraphs 55 to 67, wherein the turbidity of the filtrate is measured after a certain volume has been collected or after a certain period of time.

69. The method of paragraph 68, wherein the certain volume ranges from about 200 ml to about 600 ml, for example from about 300 ml to about 500 ml.

70. The method of paragraph 68 or 69, wherein the certain period of time ranges from about 60 seconds to about 180 seconds, for example from about 90 seconds to about 150 seconds.

71. The method of any one of paragraphs 68 to 70, wherein the turbidity of the filtrate is measured after a certain volume has been collected or after a certain period of time has passed, whichever occurs first.

72. The method of any one of paragraphs 55 to 71, wherein the filtering of the test samples of the feed material occurs at a pressure equal to or less than about 1 bar, for example equal to or less than about 0.6 bar, for example equal to or less than about 0.2 bar.

**Claims**

1.  A method for selecting the concentration of filter aid to use for the filtration of a feed material, the method comprising:

    a) filtering a first test sample of the feed material with a first concentration of a test filter aid;
    b) measuring the volume of filtrate produced in a specified time period or measuring the time taken for a specified amount of filtrate to be produced;
    c) using a calibration curve to select the concentration of filter aid to use based on the volume of filtrate produced or time taken measured in step b).

2.  The method of claim 1, wherein the method further comprises:

    d) filtering a second test sample of the feed material with a second concentration of the test filter aid that is different to the first concentration of the test filter aid;
    e) measuring the volume of filtrate produced in the specified time period or measuring the time taken for a specified amount of filtrate to be produced;
    f) determining a correction factor, F, by the following equation:

    $$F = \frac{\Delta V_C}{\Delta V_T}$$

    in which

    $\Delta V_c$ is the difference in the volume of filtrate produced in the specified time period or time taken to obtain a specified amount of filtrate, during filtration of a calibration sample of the material used to create the calibration curve with the first concentration and the second concentration of the test filter aid; and
    $\Delta V_T$ is the difference in the volume of filtrate produced in the specified time period or time taken to obtain a specified amount of filtrate, during filtration of the first test sample of the feed material with the first concentration of filter aid and the second test sample of the feed material with the second concentration of filter aid;

    g) dividing the concentration of filter aid determined by the method of claim 1 by the correction factor, F.

3.  The method of claim 1 or 2, wherein the calibration curve was obtained by a method comprising:

    i) filtering a plurality of calibration samples of a calibration material with the first concentration of the test filter aid, wherein the calibration samples each have a different concentration of calibration material;
    ii) measuring the volume of filtrate produced in the specified time period or measuring the time taken for a specified amount of filtrate to be produced for each calibration sample;
    iii) determining a preferred concentration of filter aid to use for filtration of each of the calibration samples;
    iv) defining the relationship between the preferred concentration of filter aid determined in step iii) against the volume of filtrate produced in the specified time period or the time taken to filter the specified volume of filtrate measured in step ii).

4.  The method of claim 3, wherein the preferred concentration of filter aid to use for filtration of a calibration sample is determined by a method comprising:

    A) filtering the calibration sample using a plurality of concentrations of the test filter aid;
    B) measuring the rate of pressure rise over a specified time period for each concentration of test filter aid used;
    C) determining the minimum concentration of the test filter aid that provides a desired rate of pressure rise;

    wherein the minimum concentration of the test filter aid that provides the desired pressure rate rise is the preferred concentration of filter aid to use for filtration of the calibration sample.

5. The method of any one of claims 1 to 4, wherein the filter aid is a mineral filter aid, for example wherein the mineral filter aid is diatomaceous earth and/or perlite.

6. The method of any one of claims 1 to 5, wherein the calibration material comprises organic solids, for example compressible organic solids, for example wherein the calibration material comprises barley malt extract.

7. A method for creating a calibration curve for selecting the concentration of filter aid to use for the filtration of a feed material, the method comprising the steps of any one of claims 3 to 6.

8. A method for selecting the permeability of filter aid to use for the filtration of a feed material, the method comprising:

   a. filtering a first test sample of the feed material with a first filter aid to produce a first filtrate;
   a. measuring the turbidity of the first filtrate;
   b. filtering a second test sample of the feed material with a second filter aid having a different permeability to the first filter aid material to produce a second filtrate;
   c. measuring the turbidity of the second filtrate;
   d. defining the relationship between the permeability of filter aid and turbidity of the filtrate produced;
   e. selecting a desired turbidity of the feed material after filtration and using the calibration curve to select the permeability of filter aid to use based on the desired turbidity of the feed material after filtration.

9. The method of claim 8, wherein the method further comprises:

   filtering one or more further test samples of the feed material with one or more further filter aids having different permeabilities to the first and second filter aids to produce one or more further filtrates;
   measuring the turbidity of the one or more further filtrates;
   using the turbidity of the one or more further filtrate(s) to define the relationship between the permeability of filter aid and turbidity of the filtrate produced.

10. The method of claim 8 or 9, wherein the filter aid is a mineral filter aid, for example wherein the mineral filter aid is diatomaceous earth and/or perlite.

11. The method of any one of claims 8 to 10, wherein the first filter aid has a permeability ranging from about 0.01 to about 1 darcy, for example from about 0.1 to about 0.5 darcy.

12. The method of any one of claims 8 to 11, wherein the second filter aid has a permeability ranging from about 3 to about 5 darcy, for example from about 3.5 to about 4.5 darcy.

13. The method of any one of claims 8 to 12, wherein the permeability of the filter aid having the highest permeability differs from the permeability of the filter aid having the lowest permeability by at least about 2 darcy, for example at least about 3 darcy.

14. The method of any one of claims 8 to 13, wherein the turbidity of the filtrate is measured after a certain volume has been collected or after a certain period of time.

15. A method for creating a calibration curve for selecting the permeability of filter aid to use for the filtration of a feed material, the method comprising the steps of any one of claims 8 to 14.

**FIG. 1**

**FIG. 2**

**Europäisches Patentamt**
**European Patent Office**
**Office européen des brevets**

# EUROPEAN SEARCH REPORT

Application Number

EP 17 30 6275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/244943 A1 (LADISCH MICHAEL R [US] ET AL) 3 November 2005 (2005-11-03) | 1,2,5-7 | INV. G01N15/08 B01D37/02 |
| A | * paragraphs [0153], [0156], [0149] * | 3,4 | |
| A | EP 2 006 367 A1 (MONDO MINERALS B V [NL]) 24 December 2008 (2008-12-24) * paragraphs [0124], [0128]; figure 6 * | 1-7 | |
| A | US 2002/099174 A1 (JOHNSTON ANNA [AU] ET AL) 25 July 2002 (2002-07-25) * paragraph [0079] * | 1-7 | |

TECHNICAL FIELDS SEARCHED (IPC)

G01N
B01D

The present search report has been drawn up for all claims

| Place of search | Date of completion of the search | Examiner |
|---|---|---|
| The Hague | 22 March 2018 | Lokajova, Jana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 17 30 6275

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 17 30 6275

The Search Division considers that the present European patent application does not comply with the requirements of unity of invention and relates to several inventions or groups of inventions, namely:

```
    1. claims: 1-7

            how to select the concentration of filter aid
                            ---

    2. claims: 8-15

            how to select the the permeability of filter aid
                            ---
```

## ANNEX TO THE EUROPEAN SEARCH REPORT
## ON EUROPEAN PATENT APPLICATION NO.

EP 17 30 6275

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2018

| Patent document cited in search report | | Publication date | Patent family member(s) | | Publication date |
|---|---|---|---|---|---|
| US 2005244943 | A1 | 03-11-2005 | CA | 2559943 A1 | 06-10-2005 |
| | | | EP | 1725651 A2 | 29-11-2006 |
| | | | US | 2005244943 A1 | 03-11-2005 |
| | | | WO | 2005093045 A2 | 06-10-2005 |
| EP 2006367 | A1 | 24-12-2008 | AU | 2008264037 A1 | 18-12-2008 |
| | | | CY | 1115402 T1 | 04-01-2017 |
| | | | DK | 2006367 T3 | 11-08-2014 |
| | | | EP | 2006367 A1 | 24-12-2008 |
| | | | EP | 2160457 A1 | 10-03-2010 |
| | | | ES | 2461861 T3 | 21-05-2014 |
| | | | MY | 150681 A | 28-02-2014 |
| | | | PT | 2006367 E | 30-05-2014 |
| | | | SI | 2006367 T1 | 29-08-2014 |
| | | | US | 2010285189 A1 | 11-11-2010 |
| | | | WO | 2008151928 A1 | 18-12-2008 |
| US 2002099174 | A1 | 25-07-2002 | CA | 2247817 A1 | 12-09-1997 |
| | | | CN | 1213326 A | 07-04-1999 |
| | | | EA | 199800685 A1 | 25-02-1999 |
| | | | EP | 0885046 A1 | 23-12-1998 |
| | | | JP | 2000506843 A | 06-06-2000 |
| | | | NZ | 331367 A | 28-04-2000 |
| | | | PL | 328814 A1 | 15-02-1999 |
| | | | US | 2002099174 A1 | 25-07-2002 |
| | | | WO | 9732654 A1 | 12-09-1997 |
| | | | ZA | 9701988 B | 18-11-1997 |

EPO FORM P0459

For more details about this annex : see Official Journal of the European Patent Office, No. 12/82